(19) **Europäisches Patentamt**
**European Patent Office**
**Office européen des brevets**

(11) **EP 1 980 818 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
**G01B 21/26** *(2006.01)*  **G01M 17/06** *(2006.01)*

(21) Anmeldenummer: **08103399.5**

(22) Anmeldetag: **07.04.2008**

(54) **Verfahren zur Ermittlung des Sturzes und/oder der Spur und zugehörige Vorrichtung**

Method for determining camber and/or toe and corresponding device

Procédé de détermination de l'angle de carrossage et/ou de pincement et dispositif correspondant

(84) Benannte Vertragsstaaten:
**DE FR IT**

(30) Priorität: **11.04.2007 DE 102007017302**

(43) Veröffentlichungstag der Anmeldung:
**15.10.2008 Patentblatt 2008/42**

(73) Patentinhaber: **SIEMENS AKTIENGESELLSCHAFT**
**80333 München (DE)**

(72) Erfinder:
• **Luczak, Dr. Andreas**
**90411, Nürnberg (DE)**
• **Herbert, Thorsten**
**91189, Rohr (DE)**
• **Wolfrum, Klaus**
**90425, Nürnberg (DE)**

(56) Entgegenhaltungen:
WO-A-03/089876    WO-A-2004/111569
DE-A1- 4 204 276    GB-A- 2 179 165
US-A- 4 180 915    US-A- 5 052 111
US-A- 5 311 668    US-A- 5 583 797

EP 1 980 818 B1

**Beschreibung**

Die Erfindung betrifft ein Verfahren zur Ermittlung des Sturzes und/oder der Spur eines Rades eines Fahrzeugs, wobei das Rad einen Radschlag aufweist.

Zur Messung und Einstellung der Geometrie von Fahrzeugachsen, dabei u.a. der Werte Spur, Sturz, Nachlauf, Spreizung von Fahrzeugen oder sonstigen Maschinen auf Rädern muss messtechnisch die Drehachse eines Rades bestimmt werden, um die sich das Rad im Betrieb dreht. Ein Messverfahren hierzu ist z.B. in der EP 17 39 390 offenbart. Gleichzeitig muss für die Messung und anschließende Einstellung der Achsgeometrie eine Vorrichtung geschaffen werden, welche das Fahrzeug ohne Verspannungen, d.h. ohne horizontale Kräfte an den Rädern, aufnimmt.

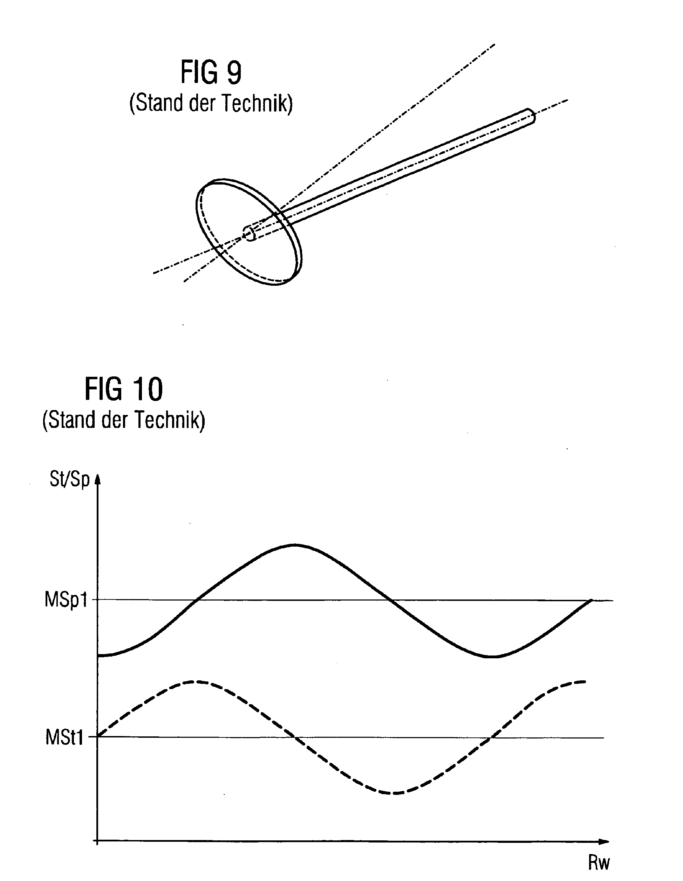

Die Messung der Drehachse basiert messtechnisch auf der optischen oder mechanischen Abtastung der Reifen- oder Felgenoberfläche. Dabei ist die Drehachse des Rades nicht zwingend identisch mit der Symmetrieachse des darauf montierten Reifen- oder Felgenkörpers. Die Abweichung der messbaren Oberfläche zur Drehachse kann in Winkelminuten gemessen werden und wird Radschlag (s. FIG 9) genannt. Dieser Radschlag muss somit ebenfalls im Rahmen der Achsgeometrie einbezogen werden. Es muss eine Lösung gefunden werden, den an der Radoberfläche gemessenen Wert der Spur- und Sturzwinkel um den Radschlag zu korrigieren.

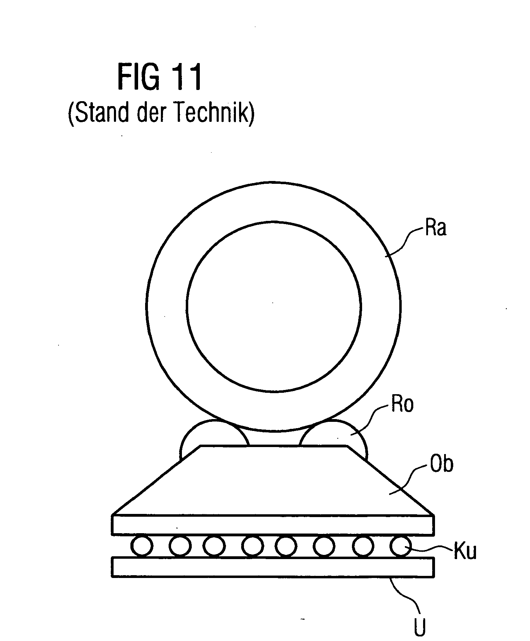

Bisher ist bekannt, den Einfluss des Radschlages auf die korrekte Messung der Raddrehachse dadurch zu eliminieren, dass das Rad um die Achse gedreht wird und gleichzeitig die Winkel zu Sturz und Spur gemessen werden. Es ergibt sich hierbei ein sinusförmiger Verlauf der Spur und Sturzwerte, wobei die Verläufe um 90° versetzt sind. FIG 10 zeigt diese sinusförmigen Verläufe mit dem Raddrehwinkel Rw als Variable auf der Abszisse und den Messwerten von Sturz Sw und Spur Sp auf der Ordinate. Der eigentliche zu messende Wert der Drehachse ist dabei der Mittelwert der Spurmessung MSp1 und der Mittelwert der Sturzmessung MSt1 der jeweiligen Sinuskurve. Dieser kann durch Mittelwertsbildung oder mathematische Modellbildung der Sinuskurve ermittelt werden. Um die Kurve aufnehmen zu können, muss sich das Rad auf einer Vorrichtung drehen können. Hierzu werden bisher Fahrwerkeinstellstände mit Schwimmschwenkplatten benutzt, wobei an jeder Schwimmschwenkplatte ein Rad aufgenommen wird wie in FIG 11 dargestellt. Das Rad Ra wird durch zwei Rollen Ro angetrieben, die an einer Schwimmplatte fixiert sind. Eine solche Schwimmplatte weist einen Kugelkäfig Ku mit einer Oberplatte Ob und einer feststehenden Unterplatte U auf. Eine solche Schwimmschwenkplatte unter jedem Rad hat die Funktion, das vor einer Messsonde stehende Rad Ra um die Achse zu drehen und so die oben angegebene Kurve aus Spur und Sturz in Abhängigkeit vom Raddrehwinkel aufzunehmen. Die Schwimmschwenkplatte erlaubt während der darauf folgenden Einstellung eine Schwimmung des Rades, so dass keine Verspannungen ins Fahrwerk des Fahrzeugs eingeleitet werden, wenn das Rad sich durch das Einstellen gegenüber der Aufstandsfläche bewegen will. Diese existierende Lösung mit Schwimmschwenkplatten ist jedoch durch die kombinierte Funktion teuer und baut hoch auf. Außerdem muss bei unterschiedlichen Achsabständen die Position der Schwimmschwenkplatten von den Vorder- zu den Hinterrädern mechanisch angepasst werden.

Alternativ kann das Rad aber auch auf einer Verschiebeplatte oder auf einem Drehtisch, wie z.B. in WO2004111569 beschrieben, oder auch in angehobenem Zustand, wie in US4180915 beschrieben, gedreht werden. Auf diese Weise lassen sich ebenfalls die in Fig. 10 dargestellten sinusförmigen Kurvenverläufe ermitteln.

Der Erfindung liegt die Aufgabe zugrunde, ein Verfahren der oben genannten Art anzugeben, mit dem der Sturz oder die Spur eines Rades bei vorhandenem Schlag des Rades auf einfache Weise ermittelt werden kann.

Die erste Aufgabe wird in folgenden Schritten gelöst:

a) in einer ersten Phase wird das Rad gedreht und für eine Vielzahl von Raddrehwinkeln Rw werden der Sturz St oder die Spur Sp unter Einfluss des Radschlages gemessen, wobei das Rad durch ein Rollenpaar (2) angetrieben wird,

b) aus den gemessenen, vom Raddrehwinkel Rw abhängigen Sturz- oder Spurwerten werden der Sturzmittelwert MSt1 oder der Spurmittelwert MSp1 bestimmt,

c) in einer zweiten Phase wird an einem anderen Messort mindestens ein Sturzwert St2, St2' oder Spurwert Sp2, Sp2' bei einem Raddrehwinkel Rw2 gemessen, der einen Schlageinfluss dSt2 bzw. dSp2 enthält, wobei das Rad bei der Messung in der zweiten Phase auf einer Schwimmplatte (4) steht,

d) er Schlageinfluss dSt2 bzw. dSp2 wird mit Hilfe des Sturzmittelwertes MSt1 oder Spurmittelwertes MSp1 ermittelt,

e) mit dem als Korrekturwert sich der Sturzmittelwert MSt2, MSt2' oder Spurmittelwert MSp2, MSp2'

wie folgt ergibt:

$$MSt2 = St2 - dSt2 \quad oder \quad MSt2' = St2' - dSt2;$$

$$MSp2 = Sp2 - dSp2 \text{ oder } MSp2' = Sp2' - dSp2.$$

Vorteilhafte Weiterbildungen der Erfindung sind den Unteransprüchen zu entnehmen.

Ein Ausführungsbeispiel der Erfindung wird im Folgenden anhand einer Zeichnung näher erläutert. Es zeigen:

FIG 1   eine Seitenansicht einer Vorrichtung zur Ermittlung von Sturz und Spur eines Fahrzeugs,

FIG 2   eine Seitenansicht der Vorrichtung gemäß FIG 1 mit einer verschiebbaren Messsonde,

FIG 3   eine Draufsicht der Vorrichtung gemäß FIG 2 mit zwei Messsonden,

FIG 4, 5, 6   einzelne Verfahrensschritte zur Vermessung von Vorder- und Hinterrädern und

FIG 7   den Verlauf der gemessenen Sturzwerte zur Ermittlung des Sturzes in Abhängigkeit vom Raddrehwinkel und

FIG 8   den zeitabhängigen Verlauf der gemessenen Sturzwerte zur Ermittlung des Sturzes.

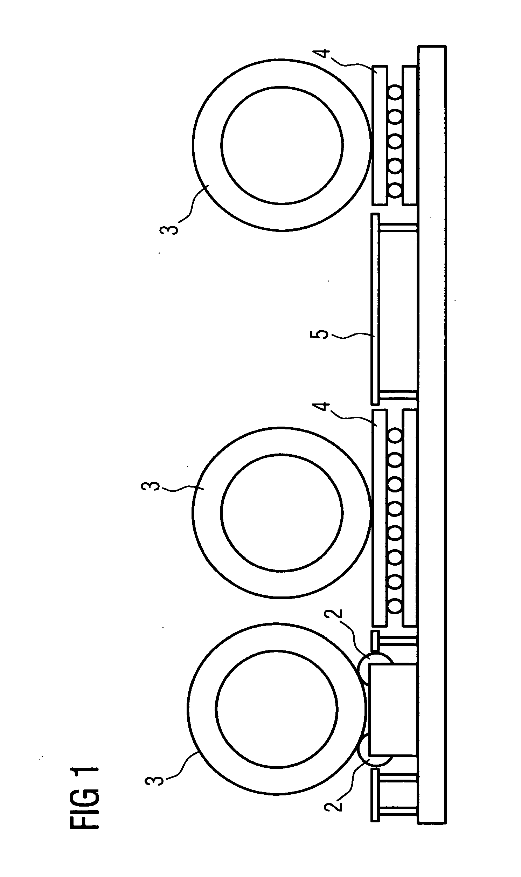

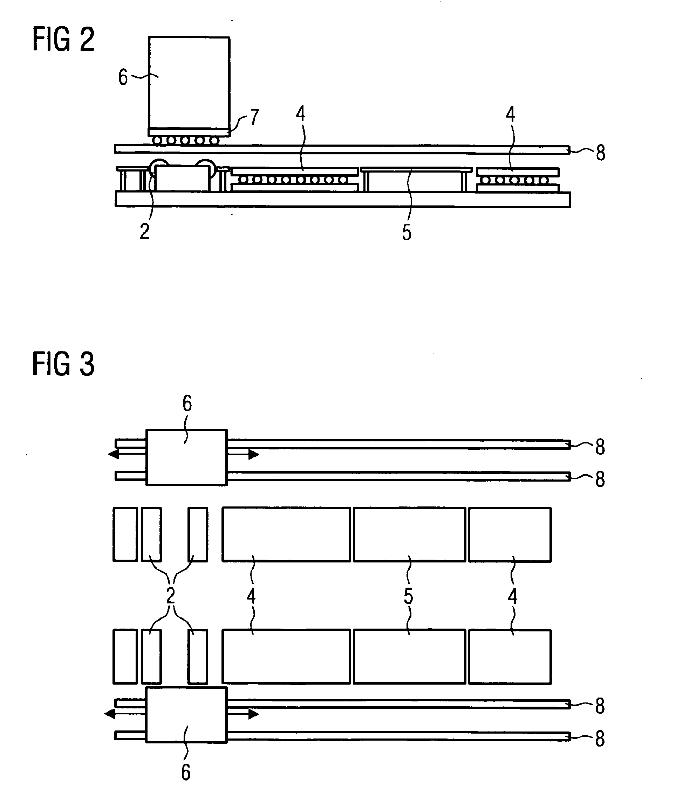

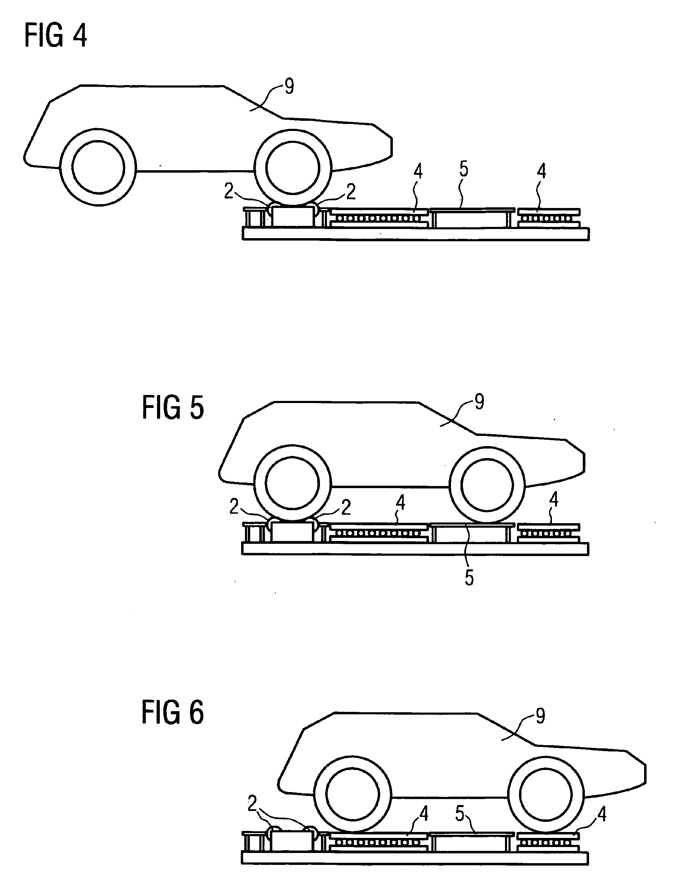

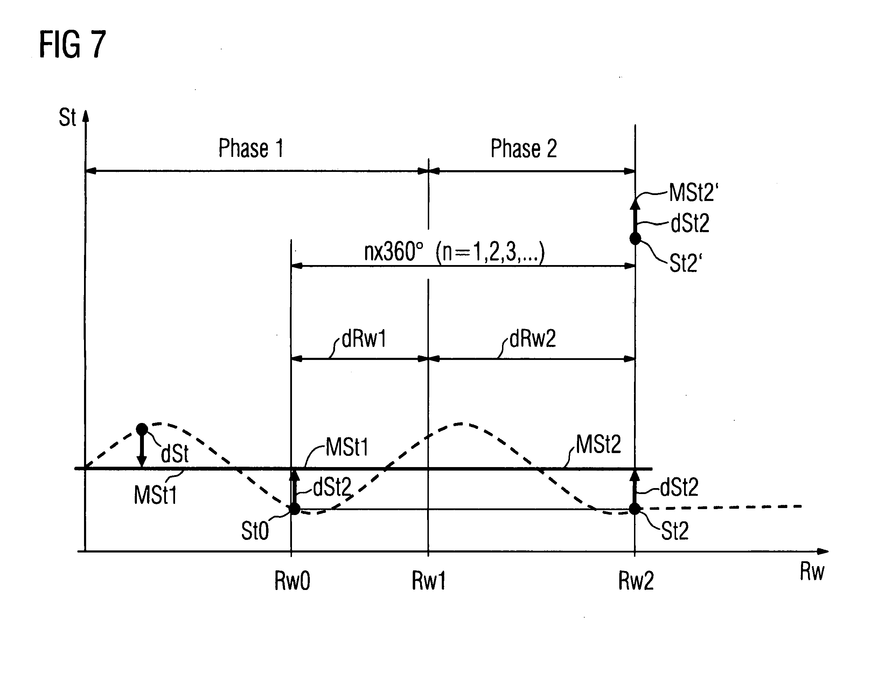

In FIG 1 ist eine Vorrichtung dargestellt, die ein Rollenpaar 2 aufweist, welches ein darin eingesatteltes Rad 3 drehen kann. Diesem Rollenpaar 2 schließen sich in Richtung des Rades zwei Schwimmplatten 4 an, die ebenfalls für die Vermessung von Vorder- und Hinterrad 3 eines Fahrzeugs benötigt werden. Zwischen diesen beiden Schwimmplatten 4 befindet sich z.B. ein Fahrbahn-Zwischenstück 5. Eine solche Vorrichtung 1 ist in einem der Länge einer Drehachse entsprechenden Abstand wie in FIG 3 dargestellt nochmals vorgesehen, so dass zugleich die Vorder- oder Hinterräder 3 einer Drehachse von den beiden Rollenpaaren 2 aufgenommen und gedreht werden können. Dies ist anschaulich in FIG 4 und 5 dargestellt. Auf jeder Seite der beiden Rollenpaare 2 ist jeweils eine Messsonde 6 vorgesehen, die mittels eines Linearschlittens 7 auf einer Linearführung 8 gemäß FIG 2 und 3 verschiebbar ist. Damit ist es möglich, Vorder- und Hinterräder 3 an verschiedenen Messpositionen mit nur zwei Messsonden 6 zu vermessen. Dies erfolgt gemäß dem folgenden Verfahren. Das Fahrzeug 9 wird von einem Werker mit seinen Vorderrädern 3 auf die beiden Rollenpaare 2 gemäß FIG 4 gefahren und die beiden nicht dargestellten Messsonden zeichnen den Verlauf des Sturzes St und/oder der Spur Sp abhängig vom Raddrehwinkel Rw in der Stellung der FIG 4 auf. Somit ergibt sich ein Messwertverlauf, der aus der FIG 9 bekannt ist. Anschließend wird das Fahrzeug mit seinen Hinterrädern auf die beiden Rollenpaare 2 gemäß FIG 5 gefahren, um die gleiche Messung für die Hinterräder durchzuführen. Darauf folgend fährt der Werker das Fahrzeug 9 weiter auf die bereits genannten Schwimmplatten 4. Mit dem Werker im Fahrzeug 9 wird im Stillstand für einen Raddrehwinkel Rw2 der Sturz St2 und/oder die Spur Sp2 mit Hilfe der Messsonden 6 an den Vorder- und Hinterrädern 3 jeweils gemessen. Der Werker steigt nun aus und die Messung wird für denselben Raddrehwinkel Rw2 nochmals wiederholt. Die für ein Rad aufgenommenen Messwerte sind beispielhaft in FIG 7 wiedergegeben. Dabei ist im Wesentlichen zu unterscheiden zwischen der ersten Phase, in der das Rad durch ein Rollenpaar 2 angetrieben wird und der winkelabhängige Schlageinfluss auf den Sturz St gemessen wird sowie der zweiten Phase, in der das Rad auf die nachfolgende Schwimmplatte 4 gefahren wird. Die erste Phase auf dem Rollenpaar 2 endet mit der Messung für den Raddrehwinkel Rw1. Diesem schließt sich die zweite Phase an, in der das Rad auf eine Schwimmplatte 4 gerollt wird. Für mindestens einen Raddrehwinkel Rw2 wird der Sturz St2 im Stillstand gemessen, bevor der Werker aussteigt. Für denselben Raddrehwinkel Rw2 ergibt sich der Messwert St2' für den Sturz, nachdem der Werker ausgestiegen ist. Aus dem Verlauf der Messwerte in der ersten Phase lässt sich der Sturzmittelwert MSt1 bei im Fahrzeug befindlichen Werker berechnen.

Der gesuchte Sturz MSt2 bei nicht im Fahrzeug befindlichem Werker und ohne Schlageinfluss lässt sich mit dem Sturzmesswert St2 ermitteln, der im Stillstand für den Raddrehwinkel Rw2 gemessen wurde.

Für diesen Raddrehwinkel RW2 lässt sich der Schlageinfluss als die Differenz dSt2 des für diesen Raddrehwinkel gemessenen Sturzwertes St2 vom berechneten Sturzmittelwert MSt1 gemäß der Formel dSt2 = St2 − MStl berechnen. Für die Phase 2 gilt, dass der Sturzmittelwert MSt2 ohne Schlageinfluss mit dem Sturzmittelwert MSt1 in der Phase 1 identisch ist, d.h. MSt2 = MSt1.

Mit dem Schlageinfluss dSt2 als Korrekturwert kann ausgehend von dem Sturzwert St2' bei Messung auf der Schwimmplatte 4 ohne den Werker der gesuchte Sturzmittelwert MSt2' des Rades ohne Einfluss des Radschlages gemäß folgender Formel bestimmt werden:

$$MSt2' = St2' - dSt2.$$

Alternativ hierzu ist eine weitere Lösung mit einer geringen Abwandlung des oben beschriebenen Verfahrens möglich. Hierbei kann auf die Messung des Sturzes St2 im Stillstand auf der Schwimmplatte mit Werker im Fahrzeug verzichtet werden. Der Schlageinfluss dSt2 wird stattdessen in der Weise bestimmt, dass die Schlagkurve entsprechend FIG 9 der Phase 1 herangezogen wird. Zur Korrektur des gemessenen Sturzwertes St2' für den Radwinkel Rw2 wird der in der Phase 1 gemessene Sturzwert St0 bei einem Radwinkel von Rw0=Rw2-nx360° (n=1,2,3...) mit Einfluss des Radschlages betrachtet. Der Schlageinfluss dSt2 auf den gemessenen Sturzwert St0 beim Raddrehwinkel Rw0 ist identisch mit dem beim Raddrehwinkel Rw2. Daraus lässt sich dSt2 über den Sturzmesswert St0 beim Raddrehwinkel Rw0 wie folgt berechnen:

$$dSt2=St0-MSt1.$$

Die Bestimmung von Rw0 ist über den Rollweg des Rades in der Phase 2 möglich. Diesem Rollweg entspricht der Differenzraddrehwinkel dRw2 der Phase 2 gem. FIG 7. Der von Rw0 bis zu dem Raddrehwinkel Rw1 zurückgelegte Differenzraddrehwinkel dRw1 ergibt sich nach der Gleichung

$$dRw1=nx360°-dRw2 \quad (n=1,2,3…).$$

Rw0 berechnet sich daraus wie folgt:

$$Rw0=Rw1-dRw1.$$

Bei den oben beschriebenen Verfahren wurde davon ausgegangen, dass sich bei der Messung in der Phase 1 ein Werker im Fahrzeug befindet. Die Verfahren sind identisch realisierbar, wenn andere Ursachen dazu führen, dass sich das Gewicht in der ersten und zweiten Phase unterscheidet.

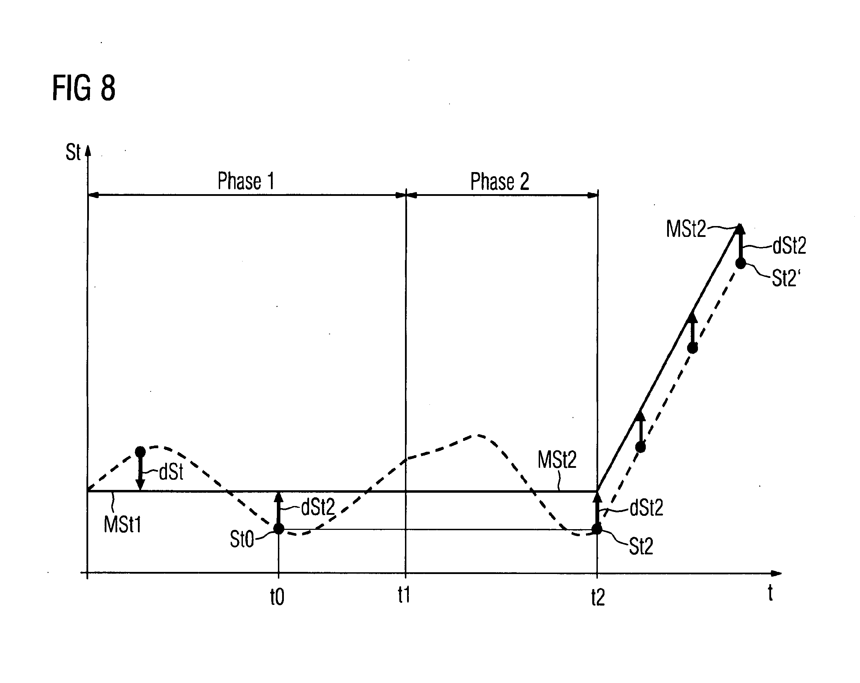

In FIG 8 ist der Verlauf des Sturzes St über der Zeitachse t aufgetragen, um das Messverfahren der oben beschriebenen zweiten Lösung zu verdeutlichen. Die Differenz dSt2 als Korrekturwert für den Schlageinfluss wird für den Zeitpunkt t0 in der Phase 1, d.h. bei demselben Raddrehwinkel wie im Zeitpunkt t2 bei der Messung des Sturzes St2' ermittelt.

In entsprechender Weise ist ebenfalls eine Spurermittlung möglich.

Selbstverständlich können die Fahrbahnen Teil einer Hubbühne sein und die Fahrschiene kann daran fest montiert sein. Auch ein Einsatz über einer Grube ist denkbar.

Die Phasen 1 und 2 bei der Messung gemäß FIG 7 können an vollständig getrennten Orten durchgeführt und gespeichert werden. Zum Beispiel wird am Einstellort durch eine Markierung am Reifen wie ein Kreidestrich oder vorhandene Kennzeichen wie ein Ventil die Winkelposition des Rades ermittelt und somit der zugehörige Korrekturwert bestimmt.

**Patentansprüche**

1. Verfahren zur Messung des Sturzes (St) und/oder der Spur (Sp) eines Rades eines Fahrzeugs, wobei das Rad einen Radschlag aufweist, in folgenden Schritten:

    a) in einer ersten Phase wird das Rad gedreht und für eine Vielzahl von Raddrehwinkeln (Rw) werden der Sturz (St) oder die Spur (Sp) unter Einfluss des Radschlages gemessen, wobei das Rad durch ein Rollenpaar (2) angetrieben wird,

    b) aus den gemessenen, vom Raddrehwinkel (Rw) abhängigen Sturz- oder Spurwerten werden der Sturzmittelwert (MSt1) oder der Spurmittelwert (MSp1) bestimmt,

    c) in einer zweiten Phase wird an einem anderen Messort mindestens ein Sturzwert (St2, St2') oder Spurwert (Sp2, Sp2') bei einem Raddrehwinkel (Rw2) gemessen, der einen Schlageinfluss (dSt2 bzw. dSp2) enthält, wobei das Rad bei der Messung in der zweiten Phase auf einer Schwimmplatte (4) steht,

    d) der Schlageinfluss (dSt2 bzw. dSp2) wird mit Hilfe des Sturzmittelwertes (MSt1) oder Spurmittelwertes (MSp1) ermittelt,

    e) mit dem als Korrekturwert sich der Sturzmittelwert (MSt2, Mast2') oder Spurmittelwert (MSp2, MSp2') wie folgt ergibt:

MSt2=St2-dSt2 oder MSt2'=St2'-dSt2;
MSp2=Sp2-dSp2 oder MSp2'=Sp2'-dSp2.

2. Verfahren nach Anspruch 1, **dadurch gekennzeichnet, dass** die Messung des Sturzes (St2) beim Raddrehwinkel (Rw2) in der zweiten Phase bei gleichem Fahrzeuggewicht wie die Messung in der ersten Phase durchgeführt wird, so dass der Sturzmittelwert (MSt2) in der zweiten Phase gegenüber dem Sturzmittelwert (MSt1) in der ersten Phase unverändert bleibt, d.h. MSt2=MSt1, und sich somit der Schlageinfluss (dSt2) wie folgt ergibt: dSt2=St2-MSt1.

3. Verfahren nach Anspruch 2, **dadurch gekennzeichnet, dass** nach Messung des Sturzes (St2) beim Raddrehwinkel (Rw2) in der zweiten Phase das Fahrzeuggewicht verändert wird und für denselben Raddrehwinkel (Rw2) der Sturz (St2') gemessen wird, mit dem sich der Sturzmittelwert (MSt2') aufgrund der Gewichtsveränderung wie folgt ergibt: MSt2'=St2'-dSt2.

4. Verfahren nach Anspruch 1, **dadurch gekennzeichnet, dass** der Schlageinfluss (dSt2) für den in der zweiten Phase beim Raddrehwinkel (Rw2) gemessenen Sturz (St2, St2') aus der raddrehwinkelabhängigen Messung in der ersten Phase für denselben Raddrehwinkel (Rw2) ermittelt und als Korrekturwert zur Bestimmung des Sturzmittelwertes (MSt2, MSt2') verwendet wird.

5. Verfahren nach Anspruch 4, **dadurch gekennzeichnet, dass** die Raddrehwinkeldifferenz (dRw2) aus dem Rollweg des Rades vom Ende der ersten Phase bis zum Messort bei dem Raddrehwinkel (Rw2) in der zweiten Phase mit Hilfe des Radradius bestimmt wird und hiermit die Raddrehwinkeldifferenz (dRw1) gemäß dRw1=nx360°-dRw2 ermittelt wird, womit sich der Raddrehwinkel (Rw0) gemäß Rw0=Rw2-dRw2-dRw1 ergibt, bei dem der Sturz denselben Schlageinfluss (dRw2) aufweist wie bei der Messung des Sturzes (St2, St2').

## Claims

1. Method for measuring the camber (St) and/or the toe (Sp) of a wheel of a vehicle, wherein the wheel has a wheel run-out, in the following steps:

   a) in a first phase the wheel is rotated and the camber (St) or the toe (Sp) are measured for a plurality of wheel rotational angles (Rw) under the influence of the wheel run-out, wherein the wheel is driven by a pair (2) of rollers,
   b) the mean value (MSt1) of the camber or the mean value (MSp1) of the toe are determined from the measured camber values or toe values which are dependent on the wheel rotational angle (Rw),
   c) in a second phase, at least one camber value (St2, St2') or toe value (Sp2, Sp2') is measured at another measuring location at a wheel rotational angle (Rw2) which contains a run-out influence (dSt2 and dSp2), wherein the wheel stands on a floating plate (4) during the measurement in the second phase,
   d) the run-out influence (dSt2 and dSp2) is determined using the mean value (MSt1) of the camber or mean value (MSp1) of the toe,
   e) with which as a correction value the mean value (Mst2, MSt2') of the camber or the mean value (Msp2, MSp2') of the toe are obtained as follows:

   MSt2=St2-dSt2 or MSt2'=St2'-dSt2;
   MSp2=Sp2-dSp2 or MSp2'=Sp2'-dSp2.

2. Method according to Claim 1, **characterized in that** the measurement of the camber (St2) is carried out at the wheel rotational angle (Rw2) in the second phase with the same vehicle weight as the measurement in the first phase, with the result that the mean value (MSt2) of the camber in the second phase remains unchanged compared with the mean value (MSt1) of the camber in the first phase i.e. MSt2=MSt1, and the run-out influence (dSt2) is therefore obtained as follows: dSt2=St2-MSt1.

3. Method according to Claim 2, **characterized in that** after the measurement of the camber (St2) at the wheel rotational angle (Rw2) in the second phase the vehicle weight is changed and, for the same wheel rotational angle (Rw2) the camber (St2') with which the mean value (MSt2') was obtained as follows owing to the change in weight: MSt2'=St2'-dSt2 is measured.

4. Method according to Claim 1, **characterized in that** the run-out influence (dSt2) for the camber (St2, St2') which is measured in the second phase at the wheel rotational angle (Rw2) is determined from the wheel-rotational-angle dependent measurement in the first phase for the same wheel rotational angle (Rw2) and is used as a correction value for determining the mean value (MSt2, MSt2') of the camber.

5. Method according to Claim 4, **characterized in that** the difference (dRw2) between the wheel rotational angles is determined from the rolling distance of the wheel from the end of the first phase to the measuring location at the wheel rotational angle (Rw2) in the second phase using the wheel radius, and in this way the difference (dRw1) between the wheel rotational angles is determined according to dRwl=nx360°-dRw2, with which the wheel rotational angle (Rw0) according to Rw0=Rw2-dRw2-dRw1 at which the camber has the same run-out influence (dRw2) as when the camber (St2, St2') is measured is obtained.

**Revendications**

1. Procédé de détermination de l'angle de carrossage ( St ) et/ou du pincement ( Sp ) d'une roue d'un véhicule, la roue ayant une excentricité, dans les stades suivantes :

   a) dans une première phase, on fait tourner la roue et on mesure pour une pluralité d'angles ( Rw ) de rotation de la roue, l'angle de carrossage ( St ) ou le pincement ( Sp ) sous l'influence de l'excentricité de la roue, la roue étant entraînée par une paire ( 2 ) de galets,
   b) à partir des valeurs d'angle de carrossage ou de pincement, qui sont mesurées et qui dépendent de l'angle ( Rw ) de rotation de la roue, on détermine la valeur ( MSt1 ) moyenne de l'angle de carrossage ou la valeur ( MSp1 ) moyenne du pincement,
   c) dans une deuxième phase, on mesure en un autre emplacement de mesure au moins une valeur ( St2, St2' ) de l'angle de carrossage ou une valeur ( Sp2, Sp2' ) du pincement pour un angle ( Rw2 ) de rotation de la roue, qui comporte une influence ( dSt2 ou dSp2 ) de l'excentricité, la roue étant, lors de la mesure dans la deuxième phase, mise sur un plateau ( 4 ) flottant,
   d) on détermine l'influence ( dSt2 ou dSp2 ) de l'excentricité à l'aide de la valeur ( MSt1 ) moyenne de l'angle de carrossage ou de la valeur ( MSp1 ) moyenne du pincement,
   e) avec celle-ci comme valeur de correction, on obtient la valeur ( MSt2, MSt2' ) moyenne de l'angle de carrossage ou la valeur ( MSp2, MSp2' ) moyenne du pincement de la manière suivants :

   MSt2=St2-dSt2 ou MSt2'=St2'-dSt2
   MSp2=Sp2-dSp2 ou MSp2'=Sp2'-dSp2

2. Procédé suivant la revendication 1, **caractérisé en ce que** l'on effectue la mesure de l'angle de carrossage ( St2 ) pour l'angle ( Rw2 ) de rotation de la roue dans la deuxième phase à un même poids de véhicule que la mesure dans la première phase de manière à ce que la valeur ( MSt2 ) moyenne de l'angle de carrossage dans la deuxième phase reste inchangée par rapport à la valeur ( MSt1 ) moyenne de l'angle de carrossage dans la première phase, c'est-à-dire MSt2=MSt1 et on obtient l'influence ( dSt2 ) de l'excentricité de la manière suivante : dSt2=St2-MSt1.

3. Procédé suivant la revendication 2, **caractérisé en ce qu'**après la mesure de l'angle de carrossage ( St2 ) à l'angle ( Rw2 ) de rotation de la roue dans la deuxième phase, on modifie le poids du véhicule et on mesure, pour le même angle ( Rw2 ) de rotation de la roue, l'angle de carrossage ( St2' ) par lequel on obtient la valeur ( MSt2' ) moyenne de l'angle de carrossage en raison de la variation de poids de la manière suivante : MSt2'=St2'-dSt2.

4. Procédé suivant la revendication 1, **caractérisé en ce qu'**on détermine l'influence ( dSt2 ) de l'excentricité sur l'angle de carrossage ( St2, St2' ) mesuré dans la deuxième phase à l'angle ( Rw2 ) de rotation de la roue, à partir de la mesure, qui dépend de l'angle de rotation de la roue, dans la première phase pour le même angle ( Rw2 ) de rotation de la roue et on l'utilise comme valeur de correction pour la détermination de la valeur ( MSt2, MSt2' ) moyenne de l'angle de carrossage.

5. Procédé suivant la revendication 4, **caractérisé en ce qu'**on détermine, à l'aide du rayon de la roue, la différence ( dRw2 ) d'angle de rotation de la roue à partir du trajet de roulement de la roue, de la fin de la première phase jusqu'à l'emplacement de mesure à l'angle ( Rw21 ) de rotation de la roue dans la deuxième phase, et on détermine ainsi la différence ( dRw1 ) de l'angle de rotation de la roue suivant dRw1=nx360°-dRw2, en obtenant ainsi l'angle ( Ru0 ) de rotation de la roue suivant ( Rw0 )=Rw2-dRw2-dRw1 pour lequel l'angle de carrossage a la même influence ( dRw2 ) de l'excentricité que dans la mesure de l'angle de carrossage ( St2, St2' ).

# FIG 1

EP 1 980 818 B1

FIG 2

FIG 3

FIG 4

FIG 5

FIG 6

# FIG 7

EP 1 980 818 B1

# FIG 8

EP 1 980 818 B1

## FIG 9
(Stand der Technik)

## FIG 10
(Stand der Technik)

# FIG 11
## (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1739390 A
- WO 2004111569 A
- US 4180915 A